(19) Europäisches Patentamt
European Patent Office
Office européen des brevets

(11) **EP 4 054 045 A1**

(12) **EUROPÄISCHE PATENTANMELDUNG**

(43) Veröffentlichungstag:
**07.09.2022 Patentblatt 2022/36**

(21) Anmeldenummer: **21161052.2**

(22) Anmeldetag: **05.03.2021**

(51) Internationale Patentklassifikation (IPC):
**H02J 3/14** (2006.01)    **H02J 3/32** (2006.01)
**H02J 3/46** (2006.01)    **H02J 3/48** (2006.01)
**B63G 1/00** (2006.01)

(52) Gemeinsame Patentklassifikation (CPC):
**H02J 3/144; H02J 3/32; H02J 3/466; H02J 3/48;**
H02J 2203/10

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder:
• **Amthor, Arvid**
  **98631 Grabfeld OT Nordheim (DE)**
• **Jessenberger, Stefan**
  **91096 Möhrendorf (DE)**
• **Schreck, Sebastian**
  **90439 Nürnberg (DE)**
• **Thiem, Sebastian**
  **91413 Neustadt an der Aisch (DE)**

(54) **VERFAHREN UND STEUERUNGSVORRICHTUNG ZUM STEUERN VON LASTFLÜSSEN ZWISCHEN MEHREREN ENERGIESYSTEMEN**

(57)    Es wird ein Verfahren zum Steuern von Lastflüssen zwischen mehreren Energiesystemen (2) über ein elektrisches Netz (4) mittels einer bezüglich der Energiesysteme (2) gemeinsamen Steuerungsvorrichtung (1), wobei durch die Energiesysteme (2) jeweils eine mit einem Lastfluss assoziierte Leistung an wenigstens einem Netzknoten des elektrischen Netzes (4) bereitstellbar ist, mit wenigstens den folgenden Schritte vorgeschlagen:
- (S1) Ermitteln von für die Lastflüsse vorgesehenen ersten Leistungen basierend auf aus den Energiesystemen (2) an die Steuerungsvorrichtung (1) übermittelten Daten, die eine Information über eine durch das jeweilige Energiesystem am jeweiligen Netzknoten maximal bereitstellbare Leistung umfassen;
- (S2) Bestimmen einer bezüglich des elektrischen Netzes (4) internen und netzknotenaufgelösten Regelleistung basierend auf den ermittelten vorgesehenen ersten Leistungen sowie basierend auf bereitgestellten Netzrandbedingungen des elektrischen Netzes (4);
- (S3) Berücksichtigen der an den Netzknoten bestimmten Regelleistung durch ein entsprechendes Reduzieren oder Erhöhen der an diesem Netzknoten durch die Energiesysteme (2) maximal bereitstellbaren Leistungen;
- (S4) Ermitteln von vorgesehenen zweiten Leistungen basierend auf den reduzierten beziehungsweise erhöhten maximal bereitstellbaren Leistungen; und
- (S5) Steuern der Lastflüsse gemäß der ermittelten zweiten Leistungen.
    Weiterhin betrifft die Erfindung eine Steuerungsvorrichtung (1) zur Durchführung des Verfahrens.

FIG 2

# FIG 2

**Beschreibung**

Die Erfindung betrifft ein Verfahren gemäß dem Oberbegriff des Patentanspruches 1 sowie eine Steuerungsvorrichtung gemäß dem Oberbegriff des Patentanspruches 14.

Energiesysteme, beispielsweise Stadtteile, Gemeinden, industrielle Anlagen, Industriegebäude, Bürogebäude und/oder Wohngebäude können untereinander, beispielsweise mittels eines Stromnetzes (elektrisches Netz), dezentral, das heißt lokal, Energie austauschen. Hierbei weisen Energiesysteme typischerweise ein oder mehrere Energiesubsysteme auf, beispielsweise ein Gebäude. Die Energiesubsysteme umfassen jeweils mehrere energietechnische Anlagen, die zur Energieerzeugung, einem Energieverbrauch oder einer Energiespeicherung vorgesehen sind.

Durch die Dezentralisierung der Energieversorgung ergibt sich das grundsätzliche technische Problem, die lokale erzeugte Energie effizient zu verteilen und insbesondere ebenfalls lokal zu verbrauchen. Mit anderen Worten ist eine technische Regelung beziehungsweise Steuerung der Verteilung der erzeugten, verbrauchten und/oder gespeicherten Energie erforderlich. Eine solche Steuerung kann mittels einer Steuerungsvorrichtung einer lokalen Energiemarktplattform ermöglicht werden.

Mit anderen Worten wird ein lokaler Energiemarkt technisch durch die lokale Energiemarktplattform, die eine Steuerungsvorrichtung ausbildet, verwirklicht. Eine solche lokale Energiemarktplattform/Steuerungsvorrichtung für den Austausch elektrischer Energie ist beispielsweise aus dem Dokument EP 3518369 A1 bekannt.

Grundsätzlich ermöglicht die lokale Energiemarktplattform eine möglichst effiziente lokale Verteilung der im Gesamtsystem erzeugten, verbrauchten und/oder gespeicherten Energie. Unter Verwendung von Optimierungsverfahren (Optimierung) werden möglichst optimale Regelvariablen ermittelt. Mit anderen Worten wird die technische Steuerung, die der effizienten Energieverteilung zugrunde liegt, durch eine der Optimierung zugrunde liegenden Zielfunktion abgebildet. Die lokale Energiemarktplattform ermittelt durch Lösen des Optimierungsproblems, das heißt durch ein Extremalisieren der Zielfunktion, die für die Steuerung erforderlichen technischen Werte. Hierbei ist die Zielfunktion mit dem Gesamtsystem, das heißt mit allen am Energieaustausch teilnehmenden Energiesystemen und/oder Energiesubsystemen assoziiert. Typischerweise werden als Zielfunktion der Gesamtenergieumsatz, die Gesamtemissionen oder die Gesamtkosten oder eine gewichtete Kombination der genannten Größen verwendet.

Grundsätzlich steigt der Anteil volatiler, schwer vorhersagbarer Einspeisung erneuerbarer Energien, beispielsweise durch Photovoltaik und/oder Windkraftanlagen sowie der Anteil dezentraler Verbraucher, beispielsweise durch Elektroautos und/oder Wärmepumpen.

Elektrische Netze und deren Netzbetreiber stellt dies vor zusätzlichen technischen Herausforderungen. Insbesondere müssen diese auf kurzfristig auftretende nicht vorhergesehene Erzeugung oder Verbrauchsschwankungen durch den Einsatz von Flexibilität (Regelleistung) reagieren, damit Netzengpässe vermieden werden können und die Systemstabilität (Netzfrequenz, Spannungshaltung) sichergestellt ist. Da die Netzfrequenz die globale Größe des europäischen und anderer Verbundnetze ist, ist nicht nur im eigenen Energiesystem die technische Funktion sicherzustellen, sondern weiterhin überlagerten Netzen beziehungsweise Netzebenen Flexibilität, das heißt Regelleistung, bereitzustellen.

Der vorliegenden Erfindung liegt die Aufgabe zugrunde, ein im Hinblick auf Netzengpässe verbessertes Verfahren zum Steuern von Lastflüssen zwischen mehreren Energiesystemen über ein elektrisches Netz bereitzustellen.

Die Aufgabe wird durch eine Vorrichtung mit den Merkmalen des unabhängigen Patentanspruches 1 sowie durch ein Verfahren mit den Merkmalen des unabhängigen Patentanspruches 14 gelöst. In den abhängigen Patentansprüchen sind vorteilhafte Ausgestaltungen und Weiterbildungen der Erfindung angegeben.

Das erfindungsgemäße Verfahren zum Steuern von Lastflüssen zwischen mehreren Energiesystemen über ein elektrisches Netz mittels einer bezüglich der Energiesysteme gemeinsamen Steuerungsvorrichtung, wobei durch die Energiesysteme jeweils eine mit einem Lastfluss assoziierte Leistung an wenigstens einem Netzknoten des elektrischen Netzes bereitstellbar, insbesondere zeitlich flexibel bereitstellbar, ist, umfasst wenigstens die folgenden Schritte:

- Ermitteln von für die Lastflüsse vorgesehenen ersten Leistungen basierend auf aus den Energiesystemen an die Steuerungsvorrichtung übermittelten Daten, die eine Information über eine durch das jeweilige Energiesystem am jeweiligen Netzknoten maximal bereitstellbare Leistung umfassen;
- Bestimmen einer bezüglich des elektrischen Netzes internen und netzknotenaufgelösten Regelleistung basierend auf den ermittelten vorgesehenen ersten Leistungen sowie basierend auf bereitgestellten Netzrandbedingungen des elektrischen Netzes;
- Berücksichtigen der an den Netzknoten bestimmten Regelleistung durch ein entsprechendes Reduzieren oder Erhöhen der an diesem Netzknoten durch die Energiesysteme maximal bereitstellbaren Leistungen;
- Ermitteln von vorgesehenen zweiten Leistungen basierend auf den reduzierten beziehungsweise erhöhten maximal bereitstellbaren Leistungen; und
- Steuern der Lastflüsse gemäß der ermittelten zweiten Leistungen.

Das erfindungsgemäße Verfahren und/oder eine oder mehrere Funktionen, Merkmale und/oder Schritte des erfindungsgemäßen Verfahrens und/oder einer seiner Ausgestaltungen können computergestützt sein. Insbesondere wird die Optimierung computergestützt durchgeführt. Beispielsweise wird das Optimierungsproblem numerisch gelöst.

Vorliegend umfasst der Begriff Leistung eine Wirkleistung und/oder eine Blindleistung.

Aus struktureller Sicht definiert insbesondere der IPCC Fifth Assessment Report ein Energiesystem als: "Alle Komponenten, die sich auf die Erzeugung, Umwandlung, Lieferung und Nutzung von Energie beziehen." Das Energiesystem ist insbesondere ein Gebäude, beispielsweise ein Bürogebäude und/oder ein Wohngebäude, eine industrielle Anlage, ein Campus, ein Stadtteil, eine Gemeinde und/oder dergleichen.

Das Energiesystem umfasst insbesondere als energietechnische Anlagen Stromgeneratoren, Energiespeicher, insbesondere Batteriespeicher, Kraftwärmekopplungsanlagen, insbesondere Blockheizkraftwerke, Gasboiler, Dieselgeneratoren, Elektrokessel, Wärmepumpen, Kompressionskältemaschinen, Absorptionskältemaschinen, Pumpen, Fernwärmenetzwerke, Energietransferleitungen, Windkrafträder oder Windkraftanlagen, Photovoltaikanlagen, Biomasseanlagen, Biogasanlagen, Müllverbrennungsanlagen, industrielle Anlagen, konventionelle Kraftwerke und/oder dergleichen, als Betriebsmittel.

Die Energiesysteme sind, beispielsweise über einen jeweiligen Netzanschlusspunkt, an das elektrische Netz angebunden. Über das elektrische Netz können die Energiesysteme Energie beziehungsweise innerhalb eines Zeitbereiches eine Leistung austauschen. Hierbei kann mittels des Vorzeichens der Leistung eine Erzeugung von einem Verbrauch unterschieden werden. Unter einer Bereitstellung einer Leistung beziehungsweise einer Energie wird vorliegend eine Energieerzeugung und/oder ein Energieverbrauch verstanden, wobei hierbei ebenfalls Energiespeicher, die zum Beladen eine Energie aus dem elektrischen Netz ausspeisen und/oder beim Entladen eine Energie in das elektrische Netz einspeisen, mit umfasst sind. Mit anderen Worten wird in einem Zeitbereich eine positive oder negative Leistung bereitgestellt, das heißt zusammengefasst eine Leistung bereitgestellt. Die Zuordnung des Vorzeichens der Leistung zur Energieerzeugung (Einspeisung in das elektrische Netz) und zum Energieverbrauch (Ausspeisung aus dem elektrischen Netz) ist vom verwendeten Zählersystem abhängig.

Die Steuerungsvorrichtung ist bezüglich der Energiesysteme eine gemeinsame beziehungsweise zentrale Vorrichtung. Sie ist dazu ausgebildet, die Energieaustausche beziehungsweise Lastenflüsse zwischen den Energiesystemen über das elektrische Netz zu steuern. Hierbei ist keine unmittelbare Steuerung erforderlich. Es ist ausreichend, wenn die Steuerungsvorrichtung zur Steuerung vorgesehene Steuerungsdaten an die jeweiligen Energiesysteme übermittelt. Diese Steuerungsdaten werden beispielsweise durch Edge-Devices der Energiesysteme empfangen und in Steuersignale für die energietechnischen Anlagen des jeweiligen Energiesystems gewandelt werden. Eine direkte Steuerung der energietechnischen Anlagen kann jedoch vorgesehen sein. Dadurch werden die energietechnischen Anlagen der Energiesysteme, die Energie beziehungsweise Leistung in das elektrische Netz einspeisen oder ausspeisen, und somit in diesem Sinne die Lastenflüsse zwischen den Energiesystemen durch die zentrale Steuerungsvorrichtung gesteuert. Hierfür kann die Steuerungsvorrichtung somit zum Datenaustausch mit den Energiesystemen ausgebildet sein.

Das elektrische Netz weist mehrere Netzknoten auf. Der Einspeisung oder Ausspeisung eines Energiesystems ist ein Netzknoten zugeordnet. Mit anderen Worten wird die positive oder negative Leistung eines Energiesystems an einem Netzknoten des elektrischen Netzes bereitgestellt. Aus den bereitgestellten Leistungen kann ermittelt werden, welche Leistung von einem Netzknoten über eine Leitung zu einem weiteren Netzknoten des elektrischen Netzes fließt beziehungsweise ausgetauscht wird. Mit anderen Worten bilden sich dadurch die Lastflüsse zwischen den Energiesystemen aus. Durch die (Leistungs-)Steuerung der energietechnischen Anlagen beziehungsweise der Energiesysteme werden somit die Lastenflüsse zwischen den Energiesystemen gesteuert.

Vorliegend werden die Begriffe Leistung und Energie vorliegend als äquivalent und untereinander austauschbar angesehen, da mit einer Leistung innerhalb eines Zeitbereiches stets eine Energie assoziiert ist.

In einem ersten Schritt des erfindungsgemäßen Verfahrens werden die für die Lastflüsse vorgesehenen ersten Leistungen basierend auf aus den Energiesystemen an die Steuerungsvorrichtung übermittelten Daten, die eine Information über eine durch das jeweilige Energiesystem am jeweiligen Netzknoten maximal bereitstellbare Leistung umfassen, ermittelt.

Mit anderen Worten berechnet die Steuerungsvorrichtung die ersten Leistungen, die den tatsächlichen Lastenflüssen zwischen den Energiesystemen zugrunde liegen könnten. Dies kann als erste Vorhersage oder als erste Simulation der Lastenflüsse angesehen werden. Mit anderen Worten berechnet die Steuerungsvorrichtung eine erste Vorhersage für die Lastflüsse, das heißt für einen zukünftigen Zeitbereich, beispielsweise für kommende 15 Minuten. Hierbei kann die erste Vorhersage beziehungsweise die erste Simulation die Lastenflüsse derart berechnen, dass das elektrische Netz durch die Lastenflüsse nicht überlastet wird. Somit wird die erste Vorhersage mittels der Information darüber berechnet, welche maximale Energiemenge das jeweilige Energiesystem im genannten Zeitbereich bereitstellen kann beziehungsweise beabsichtigt bereitzustellen. Hierbei kann ein Bereitstellen wiederum ein Einspeisen oder Ausspeisen bezüglich des elektrischen Netzes sein. Die Information über die jeweilige maximal bereitstellbare Energiemenge wird aus den Energiesystemen, beispielsweise durch jeweilige Edge-Devices und/oder einer Steuerungseinheit oder Regelungseinheit der energietechnischen Anlagen, an die Steuerungsvorrichtung vorab der tatsächlichen Leistungsflüsse übermittelt.

Die übermittelten maximal bereitstellbaren Leistungen können als Vorhersagen der Energiesysteme bezüglich ihres Betriebes angesehen werden. Somit ist nach diesem ersten Schritt noch nicht sichergestellt, dass die Kapazitätsgrenzen des elektrischen Netzes zur tatsächlichen Leistungserbringung auch ausreichen. Es kann somit eine Regelleistung an den Netzknoten erforderlich sein, die gemäß der vorliegenden Erfindung in den folgenden Schritten ermittelt und berücksichtigt wird.

In einem zweiten Schritt des erfindungsgemäßen Verfahrens wird eine bezüglich des elektrischen Netzes interne und netzknotenaufgelösten Regelleistung basierend auf den ermittelten vorgesehenen ersten Leistungen sowie basierend auf bereitgestellten Netzrandbedingungen des elektrischen Netzes bestimmt.

Hierzu werden die Netzrandbedingungen des elektrischen Netzes, beispielsweise von einem Netzbetreiber des elektrischen Netzes, bereitgestellt. Durch das Ermitteln der ersten Leistungen ist der Steuerungsplattform sinnbildlich bekannt, welcher Lastenfluss zwischen welchen Netzknoten erfolgt. Durch die bereitgestellten Netzrandbedingungen sind die elektrotechnischen Randbedingungen für die Leistungen des elektrischen Netzes bekannt, sodass aus den vorgesehenen ersten Leistungen und den Netzrandbedingungen eine Überlast einer Leitung des elektrischen Netzes durch die Steuerungsvorrichtung ermittelbar ist. Mit anderen Worten ist der Steuerungsvorrichtung dadurch bekannt, welche erste Leistung über welche Leitung des elektrischen Netzes von welchen Netzknoten zu welchem Netzknoten ausgetauscht werden soll und welche maximale Leistung (Netzrandbedingungen) die vorgesehene Leitung aufweist. Durch einen Abgleich der maximalen Leistungen mit den vorgesehenen ersten Leistungen können möglicherweise überlastete Leitungen beziehungsweise Leitungen nahe ihrer Belastungsgrenze ermittelt werden. Durch diese Kenntnis kann die Steuerungsvorrichtung für jeden an den Lastenflüssen teilnehmenden Netzknoten eine interne Regelleistung (positiv oder negativ) ermitteln, damit das elektrische Netz durch die Lastenflüsse in einen oder mehreren Bereichen nicht überlastet oder nahe seiner Belastungsgrenze, beispielsweise zu mehr als 80 Prozent, betrieben wird. Die Netzrandbedingungen umfassen die genannten jeweiligen Belastungsgrenzen. Dies erfolgt für jeden durch die Lastenflüsse betroffenen (und bekannten) Netzknoten, das heißt netzknotenscharf aufgelöst.

In einem dritten Schritt des erfindungsgemäßen Verfahrens wird die an den Netzknoten bestimmte Regelleistung durch ein entsprechendes Reduzieren oder Erhöhen der an diesem Netzknoten durch die Energiesysteme maximal bereitstellbaren Leistungen berücksichtigt.

Für jeden teilnehmenden beziehungsweise belasteten Netzknoten ist der Steuerungsvorrichtung bekannt, welche Leistung beziehungsweise Energiemenge maximal am jeweiligen Netzknoten durch das jeweilige Energiesystem beziehungsweise seine energietechnischen Anlagen bereitstellbar ist. Mit anderen Worten ist bekannt, welches Energiesystem an welchem Netzknoten welche Energie/Leistung für die Lastenflüsse beabsichtigt maximal bereitzustellen. Weiterhin ist aus einem der vorangegangen Schritte des erfindungsgemäßen Verfahrens bekannt, welche Regelleistung am jeweiligen Netzknoten für das Einhalten der Netzrandbedingungen erforderlich ist. Erfindungsgemäß ist es somit vorgesehen, die Regelleistung dadurch zu berücksichtigen, dass dies von den am Netzknoten bereitstellbaren maximalen Leistungen der Energiesysteme abgezogen wird. Je nach Vorzeichen der Regelleistung und der maximalen bereitstellbaren Leistung erfolgt somit eine Reduzierung oder Erhöhung der maximal bereitstellbaren Leistung. Mit anderen Worten werden dadurch neue und bezüglich der jeweiligen Regelleistung korrigierte maximal bereitstellbare Leistungen ermittelt.

In einem vierten Schritt des erfindungsgemäßen Verfahrens werden vorgesehene zweite Leistungen basierend auf den reduzierten beziehungsweise erhöhten maximal bereitstellbaren Leistungen ermittelt.

Mit anderen Worten wird der erste Schritt des erfindungsgemäßen Verfahrens nochmals mit den regelleistungskorrigierten maximal bereitstellbaren Leistungen durchgeführt. Es wird somit sinnbildlich fiktiv angenomm, dass die Energiesysteme die regelleistungskorrigierten maximal bereitstellbaren Leistungen an die Steuerungsvorrichtung übermittelt hätten. Dadurch werden durch die Steuerungsvorrichtung die Lastenflüsse zwischen den Energiesystemen möglichst optimal unter Berücksichtig der intern erforderlichen Regelleistung ermittelt. Das Ermitteln beziehungsweise das Berechnen der zweiten Leistungen kann wiederum als zweite Vorhersage für die Lastenflüsse beziehungsweise zweite Simulation der Lastenflüsse angesehen werden.

In einem fünften Schritt des erfindungsgemäßen Verfahrens erfolgt das Steuern der Lastflüsse gemäß der ermittelten zweiten Leistungen.

Beispielsweise werden hierfür die ermittelten zweiten Leistungen im Sinne von Sollwerten durch die Steuerungsvorrichtung an die jeweiligen Energiesysteme übermittelt. Mit anderen Worten wird die Information über die vorgesehenen Leistungen (zweite Leistungen) für die Lastenflüsse in Form von Daten an die jeweiligen Energiesysteme übermittelt. Diese können durch ein Edge-Device und/oder einer Steuereinheit einer oder mehrerer energietechnischer Anlagen des jeweiligen Energiesystems empfangen und in Steuersignale der entsprechenden energietechnischen Anlagen des Energiesystems gewandelt werden. Die energietechnischen Anlagen stellen die Leistung gemäß der ermittelten zweiten Leistungen für das elektrische Netz bereit. Dadurch erfolgen entsprechend die Lastenflüssen, die gemäß der zweiten Leistungen gesteuert werden. In diesem Sinne kann die bezüglich der Energiesysteme zentrale Steuerungsvorrichtung die Lastenflüsse steuern.

Ein Vorteil des erfindungsgemäßen Verfahrens ist die dynamische Kombination von Energieaustauschen und das Bereitstellen von Reserveleistung. Somit kann das elektrische Netz in diesem Sinne unabhängiger von einem dem elektrischen Netz übergeordneten Netz betrieben werden, da soweit wie möglich die für den Betrieb des elektrischen Netzes erforderliche Reserveleistung netzintern bereitgestellt wird. Dies ist besonders bei volatilen Einspeisern oder Erzeugern, beispielsweise für Photovoltaik und/oder Windkraftanlagen, die an das elektrische Netz angebunden sind, von Vorteil.

Weiterhin kann das erfindungsgemäße Verfahren dynamisch, das heißt in Intervallen von einem Tag, einer Stunde, 15 Minuten und/oder 5 Minuten durchgeführt werden. Das ist deshalb möglich, da der Steuerungsvorrichtung durch das Übermitteln der jeweiligen maximal bereitstellbaren Energiemenge (beziehungsweise die Information darüber) bekannt ist, wann und netztechnisch wo welches Energiesystem eine Leistung beabsichtigt bereitzustellen, das heißt einzuspeisen oder auszuspeisen.

Das erfindungsgemäße Verfahren ist in dem Sinne dynamisch, dass im Gegensatz zu statischen Verfahren nicht eine festgelegte Regelleistung bereitgestellt wird, sondern diese dynamisch und in Abhängigkeit der übermittelten vorgesehenen maximalen Energiemengen/Leistungen netzknotenscharf bestimmt wird. Mit anderen Worten wird die Regelleistung adaptiv, das heißt in Abhängigkeit der vorgesehenen Einspeisung und Ausspeisung netzknotenscharf ermittelt und berücksichtigt.

Die erfindungsgemäße Steuerungsvorrichtung zur Steuerung von Lastflüssen zwischen mehreren Energiesystemen über ein elektrisches Netz umfasst eine Kommunikationseinheit sowie eine Recheneinheit, wobei die Kommunikationseinheit dazu ausgebildet ist, Daten, die eine Information über eine durch das jeweilige Energiesystem am jeweiligen Netzknoten maximal bereitstellbare Leistung umfassen, zu empfangen. Die erfindungsgemäße Steuerungsvorrichtung ist dadurch gekennzeichnet, dass die Recheneinheit dazu ausgebildet ist

- für die Lastflüsse vorgesehenen erste Leistungen basierend auf den empfangenen am jeweiligen Netzknoten maximal bereitstellbaren Leistungen zu ermitteln;
- eine bezüglich des elektrischen Netzes interne und netzknotenaufgelösten Regelleistung basierend auf den ermittelten vorgesehenen ersten Leistungen sowie basierend auf bereitgestellten Netzrandbedingungen des elektrischen Netzes zu bestimmen;
- die an den Netzknoten bestimmten Regelleistungen durch ein entsprechendes Reduzieren oder Erhöhen der an diesem Netzknoten durch die Energiesysteme maximal bereitstellbaren Leistungen zu berücksichtigen;
- vorgesehene zweite Leistungen basierend auf den reduzierten beziehungsweise erhöhten maximal bereitstellbaren Leistungen; zu ermitteln; und
- die Lastflüsse gemäß der ermittelten zweiten Leistungen zu steuern.

Es ergeben sich zum erfindungsgemäßen Verfahren gleichartige und gleichwertige Vorteile und Ausgestaltungen der erfindungsgemäßen Steuerungsvorrichtung.

Gemäß einer vorteilhaften Ausgestaltung der Erfindung wird zusätzlich eine für ein bezüglich des elektrischen Netzes übergeordnetes elektrisches Netz vorgesehene externe Regelleistung entsprechend der internen Regelleistung berücksichtigt.

Mit anderen Worten kann das elektrische Netz insgesamt für ein bezüglich diesem übergeordneten Netz Regelleistung (positiv oder negativ) bereitstellen. Dies kann ebenfalls netzknotenscharf erfolgen, sodass einer oder mehrere Netzknoten, gegebenenfalls verschieden, zur externen Regelleistung beitragen.

Weiterhin werden durch das erfindungsgemäße Verfahren zukünftige Anforderungen an elektrische Netze eingehalten (in Deutschland unter dem Begriff *Redispatch 2.0* bekannt). Die Bereitstellung von Regelleistung (Flexibilität) aus dem elektrischen Netz für überlagerte Netzebenen beziehungsweise übergeordnete Netze wird sichergestellt, während Flexibilitäts- und Energieeinsatz im internen elektrischen Netz ebenfalls, vorliegend durch die Steuerungsvorrichtung, optimiert wird.

In einer vorteilhaften Weiterbildung der Erfindung wird die externe Regelleistung und/oder eine Netztopologie durch eine Steuereinheit des übergeordneten Netzes an die Steuerungsvorrichtung übermittelt.

Mit anderen Worten wird die externe Regelleistung und/oder die Netztopologie, die das elektrische Netz und/oder das diesem übergeordnete Netz umfassen kann, durch den Netzbetreiber des übergeordneten Netzes an die Steuerungsvorrichtung übermittelt. Alternativ oder ergänzend kann die Netztopologie des elektrischen Netzes durch den Netzbetreiber des elektrischen Netzes an die Steuerungsplattform übermittelt werden. Dadurch sind vorteilhafterweise die Netzrandbedingungen sowie die Netzknoten der Steuerungsplattform bekannt.

Gemäß einer bevorzugten Ausgestaltung der Erfindung erfolgt das Ermitteln der ersten Leistungen mittels einem ersten Optimierungsverfahren basierend auf einer ersten Zielfunktion unter Berücksichtigung der Netzrandbedingungen, wobei die ersten Leistungen die Variablen der ersten Zielfunktion sind.

Mit anderen Worten wird zum Ermitteln der ersten Leistungen eine erste mathematische Optimierung durchgeführt. Hierbei wird die erste Zielfunktion, die eine zu optimierende Eigenschaft bezüglich der Lastenflüsse quantifiziert, extremalisiert, das heißt minimiert oder maximiert. Die ersten Leistungen sind die Variablen der ersten Zielfunktion, sodass diese durch das Extremalisieren der ersten Zielfunktion ermittelt beziehungsweise ihre Werte berechnet werden. Die erste Zielfunktion wird unter Berücksichtigung von Nebenbedingungen extremalisiert. Vorliegend umfassen die Nebenbedingungen des Optimierungsproblems die Netzrandbedingungen, sodass diese dadurch bei der ersten Optimierung berücksichtigt werden. Mit anderen Worten respektiert die Lösung des ersten Optimierungsproblems, die den ersten Leistungen entspricht, die Nebenbedingungen. Die erste Zielfunktion kann der Gesamtenergieumsatz, der Primärenergieeinsatz, die Gesamtkohlenstoffdioxidemissionen und/oder die Gesamtkosten bezüglich der Lastflüsse sein.

In einer vorteilhaften Weiterbildung der Erfindung wird eine Reihenfolge der Energiesysteme gemäß welcher Reihenfolge das Reduzieren oder Erhöhen der bereitstellbaren Leistungen an einem der Netzknoten erfolgt basierend auf der ersten Optimierung festgelegt.

Mit anderen Worten kann für einen Netzknoten die für diesen Netzknoten ermittelte Reserveleistung typischerweise durch mehrere Energiesysteme bereitgestellt werden. Zur Festlegung, welches Energiesystem zuerst beziehungsweise welche Energiesysteme überhaupt für die Regelleistung herangezogen werden, können die Beiträge bestimmt werden, welches Energiesystem zum Ergebnis (Wert der Zielfunktion) des Optimierungsproblems aufweist. Wird die Zielfunktion minimiert, so wird das Energiesystem mit dem niedrigsten Beitrag zuerst für die Regelleistung herangezogen, das heißt diese wird von der durch dieses übermittelten maximale bereitstellbaren Energiemenge abgezogen. Dann wird das Energiesystems mit dem nächsthöheren Beitrag herangezogen, sodass sich bis zur vollständigen Abdeckung der erforderlichen Regelleistung eine Reihenfolge der Energiesysteme ausbildet, die der oben genannten Reihenfolge entspricht. Beispielsweise werden die Energiesysteme gemäß ihrer spezifischen Kohlenstoffdioxidemissionen angeordnet. Weiterhin ist einer Anordnung (Reihenfolge) der Energiesysteme gemäß der mit dem Bereitstellen der Regelleistung verbundenen spezifischen Entgelte (Flexibilitätskosten) möglich.

Gemäß einer vorteilhaften Ausgestaltung der Erfindung erfolgt das Ermitteln der zweiten Leistung mittels einem zweiten Optimierungsverfahren basierend auf einer zweiten Zielfunktion unter Berücksichtigung der Netzrandbedingungen, wobei die zweiten Leistungen die Variablen der zweiten Zielfunktion sind.

Mit anderen Worten werden die zweiten Leistungen, wie bereits bevorzugt die ersten Leistungen, mittels einer Optimierung ermittelt beziehungsweise berechnet. Hierbei können die Optimierungen jeweils als Simulationen oder Vorhersagen oder Prognosen bezüglich der Lastenflüsse angesehen werden, da diese jeweils die Lastenflüsse und die zugehörigen ersten beziehungsweise zweiten Leistungen für einen zukünftigen Zeitbereich, innerhalb welchem die Lastenflüsse dann basierend auf den zweiten Leistungen tatsächlich erfolgen, berechnen. Mit anderen Worten sind die Optimierungsverfahren ebenfalls Simulationsverfahren. Der Unterschied zwischen den ersten Leistungen (erste Optimierung) und zweiten Leistungen (zweite Optimierung) ist, dass die zweiten Leistungen die netzknotenaufgelöste Regelleistung im Sinne der vorliegenden Erfindung berücksichtigt. Die obenstehenden Ausführungen über die erste Optimierung können ebenfalls für die zweite Optimierung herangezogen werden. Bevorzugt sind die erste und zweite Zielfunktion gleich. Mit anderen Worten werden dem ersten und zweiten Optimierungsverfahren dieselben Zielfunktionen zugrunde gelegt. Die Nebenbedingungen sind jedoch grundsätzlich verschieden, da die Nebenbedingungen der zweiten Optimierung, die um die jeweilige Regelleistung reduzierten oder erhöhten maximale bereitstellbaren Energiemengen umfasst.

Die Nebenbedingung der zweiten Optimierung umfassen somit die um die Regelleistung korrigierten maximale bereitstellbaren Energiemengen. Die Nebenbedingung der ersten Optimierung umfassen die aus den Energiesystemen übermittelten maximale bereitstellbaren Energiemengen.

In einer vorteilhaften Weiterbildung der Erfindung umfassen die Netzrandbedingungen maximale Leitungskapazitäten für einen Lastfluss von einem Netzknoten zu einem weiteren Netzknoten.

Diese maximale Leistungskapazitäten (maximale Leistung) beziehungsweise die Information über die jeweiligen maximalen Leistungs- und/oder Anschlusskapazitäten (maximale Anschlussleistung) können durch die Energiesysteme an die Steuerungsplattform übermittelt und bei den Optimierungen berücksichtigt werden. Vorteilhafterweise respektieren die erste und zweiten Leistungen als Lösungen der jeweiligen Optimierung dadurch die technischen Randbedingungen, die durch die maximalen Leitungs- beziehungsweise Anschlusskapazitäten charakterisiert sind.

Gemäß einer vorteilhaften Ausgestaltung der Erfindung wird die an einem Netzknoten erforderliche interne Regelleistung mittels eines Risikofaktors aus der maximalen Leistungskapazität ermittelt.

Der Risikofaktor kann ebenfalls als Auslastungsfaktor der jeweiligen Leistung bezeichnet werden. Dadurch kann vorteilhafterweise gekennzeichnet beziehungsweise ermittelt werden, wann eine Leitung als belastet gilt. Beispielsweise beträgt der Risikofaktor 80 Prozent der maximalen Leistungskapazität. Je nach Auslastung ist mehr oder weniger Regelleistung an den jeweiligen Netzknoten erforderlich.

Beispielsweise soll an einem Netzknoten $i$ mehr eingespeist als verbraucht werden. Der Netzknoten $i$ versorge den Netzknoten $j$ (hoher Verbrauch) somit über die Leitung $i \rightarrow j$. Wäre diese Leitung dadurch nahe ihrer maximalen Leistungskapazität (Grenzkapazität), so kann dem gemäß der vorliegenden Erfindung dadurch entgegengewirkt werden, indem beispielsweise am Netzknoten $j$ zusätzlich eine Leistung eingespeist wird (Regelleistung) und/oder die Last reduziert wird. Es wird somit ermittelt für welchen Knoten ein Bedarf an interner Regelleistung (Flexibilitätsbedarf) besteht. Diese kann dann durch den genannten Risikofaktor $\mu$ beispielsweise durch $P_k = \mu \cdot P_{i,j,t,\max}$ berechnet werden, wobei $P_{i,i,t,\text{max}}$ die maximale Leistungskapazität der Leitung $i \to j$ bezeichnet. Der Risikofaktor kann durch einen Netzbetreiber des elektrischen Netzes festgelegt und beispielsweise an die Steuerungsvorrichtung übermittelt werden. Die durch die Steuerungsvorrichtung ermittelte Regelleistung kann weiterhin an den Netzbetreiber übermittelt werden.

In einer vorteilhaften Weiterbildung der Erfindung umfassen die an die Steuerungsplattform übermittelten Daten eine Information über eine maximale Anschlussleistung der jeweiligen Energiesysteme.

Dadurch kann die jeweilige maximale Anschlussleistung (Anschlusskapazität) der Energiesysteme bei den Optimierungen durch die Steuerungsvorrichtung berücksichtigt werden. Die Information über die maximalen Anschlussleitungen können bevorzugt zusammen mit der Information über die jeweilige maximale bereitstellbare Energiemenge an die Steuerungsvorrichtung übermittelt werden.

Gemäß einer vorteilhaften Ausgestaltung der Erfindung sind die bereitstellbaren Leistungen, die entsprechend der bestimmten Regelleistung reduziert oder erhöht werden, mit einem zeitlich verschiebbaren Verbrauch, einer zeitlich verschiebbaren Erzeugung und/oder mit einer Bereitstellung durch einen Energiespeicher des jeweiligen Energiesystems assoziiert.

Dadurch kann vorteilhafterweise vermieden werden, dass zeitlich nicht verschiebbare Leistungen für die Regelleistung herangezogen werden. Übermitteln die jeweiligen Energiesysteme eine Kennzeichnung ihrer jeweiligen vorgesehenen maximale bereitstellbaren Energiemenge als zeitlich verschiebbar oder zeitlich nicht verschiebbar, so kann die Steuerungsvorrichtung bevorzugt die zeitlich verschiebbaren Leistungen innerhalb der Optimierungen für das Bereitstellen der Regelleistung berücksichtigen. Mit anderen Worten können die Energiesysteme eine Information über zeitlich verschiebbare, beispielsweise innerhalb eines jeweiligen Zeitbereiches, vorgesehene Leistungen/Energiemengen an die Steuerungsvorrichtung übermitteln. Bevorzugt werden die zeitlich verschiebbaren Leistungen für das Bereitstellen der Reserveleistung berücksichtigt.

In einer vorteilhaften Weiterbildung der Erfindung wird die Steuerungsvorrichtung zum Steuern der Lastflüsse innerhalb eines lokalen Energiemarktes verwendet.

Dadurch wird vorteilhafterweise innerhalb eines lokalen Energiemarktes ein vorteilhaftes Berücksichtigen von Regelleistung ermöglicht. Die Steuerungsvorrichtung gemäß der vorliegenden Erfindung und/oder einer ihrer Ausgestaltungen ist besonders für den Betrieb von lokalen Energiemärkten geeignet, da diese ein netzinternes Regeln des elektrischen Netzes mittels der ermittelten und durch die Energiesysteme bereitgestellten Regelleistung, im Wesentlichen unabhängig von einem übergeordneten Netz, ermöglicht. Im Rahmen eines lokalen Energiemarktes können die Energiesysteme zusätzlich eine Information über ein spezifisches Entgelt (Entgelt pro Kilowattstunde) für die vorgesehene bereitstellbare maximale Energiemenge übermitteln. Somit kann im Rahmen eines lokalen Energiemarktes die übermittelten Daten ebenfalls als Angebot oder Gebot bezeichnet beziehungsweise angesehen werden.

Wird die Steuerungsvorrichtung für einen lokalen Energiemarkt verwendet, so sind die Zielfunktionen bevorzugt die mit den Lastflüssen assoziierten Gesamtkosten, die sich aus der ersten beziehungsweise zweiten Leistung (Variablen) und dem jeweiligen zugehörigen Entgelt ausbilden.

Besonders bevorzugt bildet die Steuerungsvorrichtung eine lokale Energiemarktplattform aus. Die Steuerungsvorrichtung kann bevorzugt cloudbasiert sein.

Gemäß einer bevorzugten Ausgestaltung der Erfindung wird das erfindungsgemäße Verfahren oder das Verfahren gemäß einer Ausgestaltung der vorliegenden Erfindung für einen kommenden Tag, insbesondere für den nächsten Tag, durchgeführt.

Besonders im Hinblick auf einen lokalen Energiemarkt wird dadurch vorteilhafterweise ein reserveleistungsberücksichtigender Day-Ahead Handel ermöglicht.

In einer vorteilhaften Weiterbildung der Erfindung wird das erfindungsgemäße Verfahren oder das Verfahren gemäß einer Ausgestaltung der vorliegenden Erfindung wiederholend in Zeitabschnitten von einem Tag, einer Stunden, 15 Minuten und/oder 5 Minuten durchgeführt.

Besonders im Hinblick auf einen lokalen Energiemarkt wird dadurch vorteilhafterweise ein reserveleistungsberücksichtigender Intra-Day Handel ermöglicht.

Weitere Vorteile, Merkmale und Einzelheiten der Erfindung ergeben sich aus den im Folgenden beschriebenen Ausführungsbeispielen sowie anhand der Zeichnungen. Dabei zeigen schematisiert:

Figur 1     eine Übersicht eines der vorliegenden Erfindung oder eines ihrer Ausgestaltungen zugrundliegenden Gesamtsystems; und

Figur 2     ein Ablaufdiagramm des Verfahrens zum Steuern von Lastflüssen gemäß einer Ausgestaltung der vorliegenden Erfindung.

Gleichartige, gleichwertige oder gleichwirkende Elemente können in einer der Figuren oder in den Figuren mit denselben Bezugszeichen versehen sein.

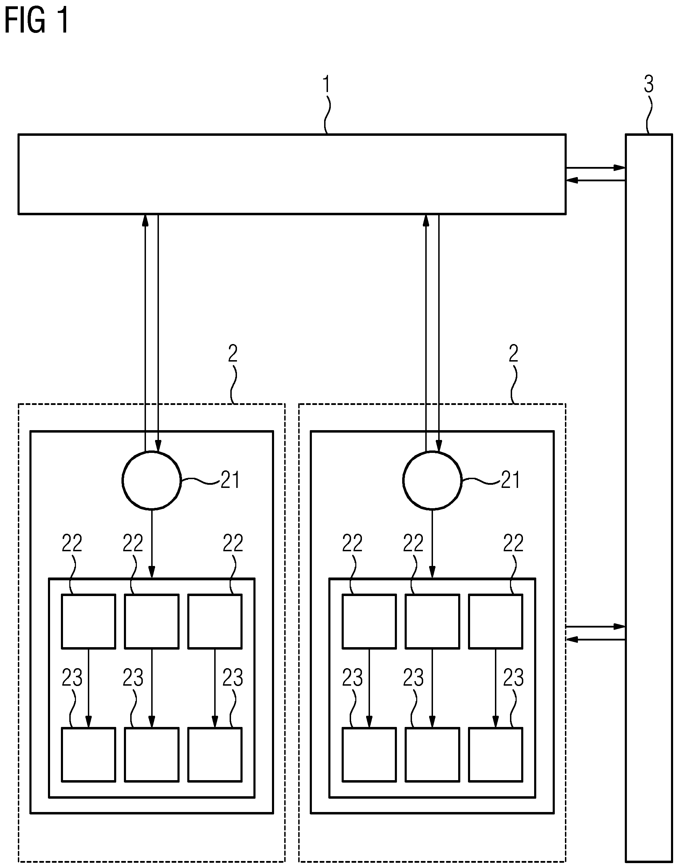

Die Figur 1 zeigt schematisiert ein mögliches Gesamtsystem, welches einem Verfahren gemäß einer Ausgestaltung der vorliegenden Erfindung zugrunde liegen kann.

Das dargestellte Gesamtsystem umfasst wenigstens zwei Energiesysteme 2, beispielsweise zwei Gebäude, eine bezüglich der Energiesysteme 2 zentrale Steuerungsvorrichtung 1 sowie eine Steuereinheit 3 eines elektrischen Netzes.

Die Energiesysteme 2 können über das elektrische Netz Energie beziehungsweise Leistung austauschen. Diese Lastflüsse werden zwischen den Energiesystemen 2 durch die Steuerungsvorrichtung 1 gesteuert. Hierzu können Daten beziehungsweise Informationen zwischen den Energiesystemen 2 und der Steuerungsvorrichtung 1, zwischen der Steuerungsvorrichtung 1 und der Steuereinheit 3 des elektrischen Netzes sowie zwischen den Energiesystemen 2 und der Steuereinheit 3 des elektrischen Netzes ausgetauscht werden. Diese Datenaustausche sind in der Figur 1 durch die jeweiligen Pfeile symbolisiert.

Die Energiesysteme 2 umfassen jeweils ein Edge-Device, welches den Datenaustausch und somit die Kommunikation mit der Steuerungsvorrichtung 1 ermöglicht. Weiterhin können die Edge-Devices für die Kommunikation mit der Steuereinheit des elektrischen Netzes 4 und somit mit dem Netzbetreiber ausgebildet sein.

Die Edge-Devices sind dazu ausgebildet, Daten bezüglich des Steuerns von energietechnischen Anlagen 23 des jeweiligen Energiesystems von der Steuerungsvorrichtung 1 zu empfangen und ergänzend zu bearbeiten. Die Edge-Devices 21 geben diese empfangenen und gegebenenfalls bearbeiteten Daten an die Steuereinheit 22 der jeweiligen energietechnischen Anlagen 23 weiter. Dadurch werden die energietechnischen Anlagen 23 entsprechend den durch die Steuerungsvorrichtung 1 an die Edge-Devices 21 übermittelten Daten gesteuert. Da schließlich die energietechnischen Anlagen 23 eine Leistung für das elektrische Netz über den Netzanschlusspunkt des zugehörigen Energiesystems 2 bereitstellen, werden somit die Lastenflüsse zwischen den Energiesystemen 2 durch die zentrale Steuerungsvorrichtung 1 gesteuert. Beispielsweise sind die Edge-Devices 23 als Energiemanagementvorrichtung ausgebildet. Die Edge-Devices 23 bilden weiterhin eine Kommunikationsschnittstelle zur Steuerungsvorrichtung 1 aus.

Die Steuerungsvorrichtung 1 ist besonders bevorzugt als lokale Energiemarktplattform ausgebildet. Im Rahmen eines lokalen Energiemarktes werden Angebote beziehungsweise Gebote für die Leistungen/Energiemengen, die das jeweilige Energiesystem zu einem oder mehreren der Lastenflüsse beabsichtigt beizutragen, durch die Edge-Devices 23 an die lokale Energiemarktplattform 1 übermittelt. Zum Steuern der Lastenflüsse sammelt somit die Steuerungsvorrichtung 1 beziehungsweise die lokale Energiemarktplattform 1 die Gebote aller teilnehmenden Energiesysteme 2 sinnbildlich ein. In diesem Sinne können die Energiesysteme 2 ebenfalls als Teilnehmer bezeichnet werden.

Weiterhin werden Netzrandbedingungen und weitere Anforderungen des elektrischen Netzes, beispielsweise seine Netztopologie sowie bezüglich des elektrischen Netzes externe Reserveleistungsanforderungen (externe Flexibilitätsbedarfe beziehungsweise Anforderungen übergeordneter Netze beziehungsweise höheren Netzebenen), durch die Steuereinheit 3 an die Steuerungsvorrichtung 1 übermittelt.

Die Energiesysteme 2 können Energiesubsysteme umfassen, die dann im Sinne der vorliegenden Erfindung beziehungsweise einer ihrer Ausgestaltungen als Energiesysteme behandelt werden.

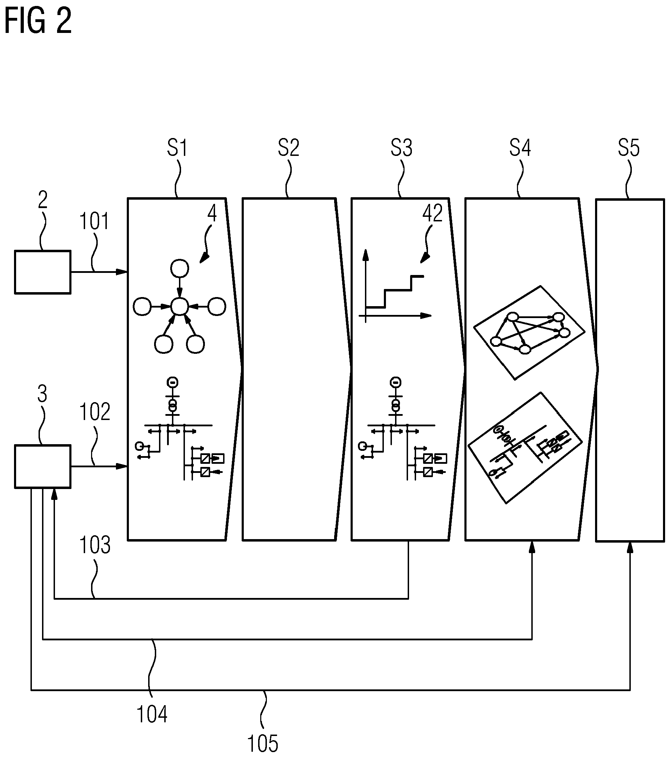

Die Figur 2 zeigt ein Ablaufdiagramm eines Verfahrens gemäß einer Ausgestaltung der vorliegenden Erfindung.

In dem folgenden Ausführungsbeispiel wird das Verfahren beziehungsweise die Steuerungsvorrichtung 1 für das Steuern von Lastenflüssen zwischen mehreren Energiesystemen 2 im Rahmen eines lokalen Energiemarktes verwendet. Hierbei kann die Steuerungsvorrichtung 1 als lokale Energiemarktplattform ausgestaltet sein.

Die Energiesysteme 2 bilden im Sinne eines lokalen Energiemarktes die Teilnehmer aus, das heißt diese beabsichtigen an einem der Lastenflüsse teilzunehmen. Die Lastenflüsse werden wieder über ein elektrisches Netz, an welchem die Energiesysteme 2 angebunden sind, ausgetauscht.

Weiterhin ist eine Steuereinheit 3 eines Netzbetreibers des elektrischen Netzes im Verfahren eingebunden, sodass die Steuereinheit Daten beziehungsweise Informationen mit der Steuerungsvorrichtung 1 und den Energiesystemen 2 austauschen kann. Die Datenaustausche beziehungsweise Informationsaustausche sind durch die Pfeile 101,...,105 gekennzeichnet.

Das Verfahren gemäß der vorliegenden Ausgestaltungen weist wenigstens fünf Schritte S1,...,S5 auf. Vorliegend werden die Schritte S1,...,S5 durch die Steuerungsvorrichtung 1 durchgeführt. Mit anderen Worten ist die Steuerungsvorrichtung 1 zur Durchführung der Schritte S1,...,S5 ausgebildet.

In einem den Schritten S1,...,S5 zeitlich vorgelagerten Schritt übermitteln die Energiesysteme 2 eine Information über ihre maximal bereitstellbare Energiemenge $E^{\mathrm{B}}_{\max,t}$ [kWh] beziehungsweise Leistung, eine Information über ein damit assoziiertes minimale oder maximales Entgelt $c^{\mathrm{B}}_{\min/\max,t}$ [Entgelt/kWh] sowie ergänzend eine zugehörige maximale Anschlussleistung an die Steuerungsvorrichtung 1. Dies kann für einen vorgesehenen Zeitpunkt beziehungsweise Zeitbereich t erfolgen. Für einen Verbrauch wird ein maximales Entgelt und für eine Erzeugung ein minimales Entgelt übermittelt. Weiterhin können verschiebbare Erzeugungs- und Verbrauchsarten als verschiebbar gekennzeichnet beziehungsweise übermittelt werden. Zusammenfassend können diese an die Steuerungsvorrichtung 1 übermittelten Daten/Informationen als Gebot oder Angebot für die Teilnahme des jeweiligen Energiesystems 2 an einem der Lastenflüsse angesehen werden.

Insbesondere bezüglich zeitlich verschiebbarer Leistungen können drei Angebote (Flexibilitätsangebote) unterschieden werden.

Ein erstes Flexibilitätsangebot ist durch einen zeitlich verschiebbaren Verbrauch für einen Zeitbereich gekennzeichnet. Hierbei werden für den genannten Zeitbereich eine maximal zu beziehende Energiemenge, eine gegebenenfalls zeitabhängige Anschlussleistung sowie ein maximales Entgelt für den Verbrauch an die Steuerungsvorrichtung 1 in Form von Daten/Information übermittelt.

Ein zweites Flexibilitätsangebot ist durch eine zeitlich verschiebbare Erzeugung für einen Zeitbereich gekennzeichnet. Hierbei werden für den genannten Zeitbereich eine maximal zu erzeugende Energiemenge, eine gegebenenfalls zeitabhängige Anschlussleistung sowie ein minimales Entgelt für die Erzeugung an die Steuerungsvorrichtung 1 in Form von Daten/Information übermittelt.

Ein drittes Flexibilitätsangebot ist durch die Verwendung eines Energiespeichers eines der Energiesysteme 2 für einen Zeitbereich gekennzeichnet. Hierbei werden für den genannten Zeitbereich eine maximale Speicherkapazität, eine maximale Lade- und minimale Entladeleistung des Energiespeichers (gegebenenfalls zeitabhängig), ein Lade- und Entladewirkungsgrad (gegebenenfalls zeitabhängig) sowie ein minimales Entgelt für die Verwendung des Energiespeichers an die Steuerungsvorrichtung 1 in Form von Daten/Information übermittelt.

Zusammenfassend wird wenigstens durch jedes teilnehmende Energiesystem eine maximale bereitstellbare Leistung/Energiemenge an die Steuerungsvorrichtung 1 für einen vorgesehenen Zeitbereich übermittelt.

In einem ersten Schritt S1 des Verfahrens werden durch die Steuerungsvorrichtung 1 für die Lastflüsse vorgesehenen ersten Leistungen basierend auf aus den Energiesystemen 2 an die Steuerungsvorrichtung 1 übermittelten Daten/Angeboten, die die Information über eine durch das jeweilige Energiesystem 2 am jeweiligen Netzknoten maximal bereitstellbare Leistung umfassen, ermittelt. Das Übermitteln der genannten Daten ist mit dem Peil 101 gekennzeichnet.

Das Ermitteln der vorgesehenen ersten Leistungen erfolgt mittels einer mathematischen Optimierung. Die Optimierung beziehungsweise das Optimierungsproblem basiert bevorzugt auf einer Zielfunktion der Form

$$\sum_{t,n,k} P^{\mathrm{B}}_{t,n,k} \cdot c^{\mathrm{B}}_{\min,t,k} - P^{\mathrm{A}}_{t,n,k} \cdot c^{\mathrm{A}}_{\max,t,n,k} + P^{\mathrm{BAT}}_{\mathrm{dch},t,n,k} \cdot c^{\mathrm{BAT}}_{\mathrm{dch},min,t,n,k} + P^{\mathrm{G}}_{i,j,t} \cdot c^{\mathrm{G}}_{\mathrm{fees},i,j,t'}$$

wobei $P^{\mathrm{B}}_{t,n,k}$ die zu ermitelnde erste Leistung (Variable) für einen vorgesehenen übermittelten Verbrauch (englisch: Bid) und $c^{\mathrm{B}}_{\min,t,k}$ ein zugehöriges übermitteltes minimales Entgelt, $P^{\mathrm{A}}_{t,n,k}$ die zu ermitelnde erste Leistung (Variable) für einen vorgesehenen übermittelten Verbrauch (englisch: Ask) und $c^{\mathrm{A}}_{\max,t,n,k}$ das zugehörige maximale Entgelt, $P^{\mathrm{BAT}}_{\mathrm{dch},t,n,k}$ (englisch: discharge/charge; abgekürzt dch/ch) die erste Leistung (Variable) für eine vorgesehene und übermittelte Verwendung eines Energiespeichers und $c^{\mathrm{BAT}}_{dch,\min,t,n,k}$ ein zugehöriges minimales Entgelt für die Verwendung des Energiespeichers, insbesondere eines Batteriespeichers. Die über eine Leitung $i \rightarrow j$ vorgesehene fließende Leistung ist mit $P^{\mathrm{G}}_{i,j,t}$ bezeichnet, wobei hierfür ebenfalls ein Entgelt $c^{\mathrm{G}}_{\mathrm{fees},i,j,t}$ (Netzentgelt) vorgesehen sein kann.

Mit anderen Worten sind die $P^{\mathrm{X=A,B,BAT}}_{t,n,k}$ die Entscheidungsvariablen (Variablen), die mittels der ersten Optimierung bestimmt werden. Die Variablen entsprechen den vorgesehenen ersten Leistungen des Teilnehmers $k$, am Netzknoten $n$ zum Zeitpunkt $t$ beziehungsweise innerhalb des mit $t$ gekennzeichneten Zeitbereichs. Weiterhin wird vorliegend eine mit einer Erzeugung assoziierte Leistung positiv und eine mit einem Verbrauch assoziierte Leistung negativ innerhalb der Zielfunktion bewertet, wobei vorliegend die Zielfunktion beziehungsweise deren Wert minimiert wird. Dadurch werden die Variablen $P^{\mathrm{X=A,B,BAT}}_{t,n,k}$ beziehungsweise deren Werte, die den ersten Leistungen entsprechen, bestimmt.

Weiterhin weist das Optimierungsproblem die folgenden Nebenbedingungen auf:

$$\sum_k P^{\mathrm{B}}_{t,n,k} - \sum_k P^{\mathrm{A}}_{t,n,k} + \sum_i P^{\mathrm{G}}_{i,k,t} + \sum_k P^{\mathrm{BAT}}_{\mathrm{ch},t,n,k} - \sum_k P^{\mathrm{BAT}}_{\mathrm{dch},t,n,k} = 0,$$

für alle Netzknoten $n$ und Zeitpunkte $t$ innerhalb eines Zeitbereiches $T$.

Ferner werden die Nebenbedingungen $P^{\mathrm{B}}_{t,n,k} \leq P^{\mathrm{B}}_{\mathrm{max},t,n,k}$ und $P^{\mathrm{A}}_{t,n,k} \leq P^{\mathrm{A}}_{\mathrm{max},t,n,k}$ verwendet.

Hierbei entsprechen $P^{\mathrm{A,B}}_{\mathrm{max},t,n,k}$ den aus den Energiesystemen 2 an die Steuerungsvorrichtung 1 übermittelten jeweiligen maximal bereitstellbaren Leistungen beziehungsweise innerhalb eines Zeitintervalls $\Delta t$ den übermittelten jeweiligen maximal bereitstellbaren Energien. Dadurch werden diese übermittelten Daten bei der Optimierung berücksichtigt.

Für Energiespeicher (Flexibilität erster Art) wird die weitere Nebenbedingung

$$E^{\mathrm{BAT}}_t = E^{\mathrm{BAT}}_{t-1} + P^{\mathrm{BAT}}_{\mathrm{ch},t} \cdot \eta_{\mathrm{ch}} - \frac{1}{\eta_{\mathrm{dch}}} P^{\mathrm{BAT}}_{\mathrm{dch},t},$$

verwendet, wobei diese aus Übersichtsgründen ohne Indices für Netzknoten und Teilnehmer dargestellt ist.

Für verschiebbare Lasten (Flexibilität zweiter Art für verschiebbaren Verbrauch oder verschiebbare Erzeugung) sind durch die Nebenbedingung

$$\sum_{t_{\mathrm{start}}}^{t_{\mathrm{end}}} P^{\mathrm{A,B}}_{t,n,k} \cdot \Delta t \leq E^{\mathrm{A,B}}_{\mathrm{max},n,k},$$

gekennzeichnet.

Für einen Leitungsfluss beziehungsweise Lastfluss von einem Netzknoten $i$ zu einem weiteren Netzknoten $j$ des elektrischen Netzes werden die Netzrandbedingungen $P_{i,j} = -P_{j,i}$ sowie $P_{i,j} \leq P_{i,i,t,\mathrm{max}}$ gefordert. Hierbei kann $P_{i,i,t,\mathrm{max}}$ durch die Energiesysteme 2 und/oder durch einen Netzbetreiber des elektrischen Netzes 4, beispielsweise durch eine Steuereinheit 3 des elektrischen Netzes 4, an die Steuerungsvorrichtung 1 übermittelt werden und/oder durch ein der Steuerungsvorrichtung 1 bekanntes Netzmodell ermittelt werden. Das Übermitteln der Netzrandbedingungen des elektrischen Netzes 4 durch die Steuereinheit 3 des elektrischen Netzes 4 ist durch den Pfeil 102 symbolisiert.

In einem zweiten Schritt S2 des Verfahrens wird eine bezüglich des elektrischen Netzes interne und netzknotenaufgelöste Regelleistung basierend auf den ermittelten vorgesehenen ersten Leistungen sowie basierend auf bereitgestellten Netzrandbedingungen des elektrischen Netzes 4 bestimmt.

Mit anderen Worten wird durch den zweiten Schritt 2 der Flexibilitätsbedarf des elektrischen Netzes 4 für die vorgesehenen ersten Leistungen für jeden der Netzknoten ermittelt. Mit anderen Worten steht nach dem ersten Schritt S1, mittels welchem basierend auf den übermittelten Daten/Geboten die ersten Leistungen berechnet wurden, welche Leistung über welche Leitung und welche Netzknoten fließen sollte, sodass durch die Kenntnis der Netzrandbedingungen (maximale Leistungskapazität) feststeht, ob eine Leitung durch den vorgesehenen Lastenfluss, der der zugehörigen ersten Leistung entspricht, überlastet ist. Hierbei kann eine Leitung bereits ab 80 Prozent ihrer Maximalauslastung als überlastet gekennzeichnet werden.

Mit anderen Worten wird innerhalb des zweiten Schrittes S2 berechnet, welche Netzknoten beziehungsweise welche Leitungen voraussichtlich nahe an ihrer Kapazitätsgrenze betrieben werden. Da das Ergebnis des ersten Optimierungsproblems (erste Leistungen) auf Vorhersagen der einzelnen Energiesysteme 2 beziehungsweise Teilnehmer basieren (übermittelte maximal bereitstellbare Energiemenge/Leistung), ist nicht sichergestellt, ob die Kapazitätsgrenzen zur tatsächlichen Leistungserbringung ausreichend sind. Stark ausgelastete Leitungen, beispielsweise $P_{i,j,t} \geq \alpha * P_{i,j,t,\mathrm{max}}$ mit $0 \leq \alpha \leq 1$, deuten auf einen internen Flexibilitätsbedarf innerhalb des elektrischen Netzes 4 betrachteten Netzgebietes hin. Der interne Flexibilitätsbedarf (Regelleistung) kann durch die Steuerungsvorrichtung 1 und/oder der Steuereinheit 3 des elektrischen Netzes 4, das heißt durch den Netzbetreiber, erfolgen.

Weiterhin kann ein Risikofaktor $\mu$ für das Bestimmen der Regelleistung beziehungsweise des Flexibilitätsbedarfs vorgesehen sein, das heißt diese Regelleistung $P_{\mathrm{Flex},k}$ wird gemäß $P_{\mathrm{Flex},k} = \mu \cdot P_{i,j,t,\mathrm{max}}$ bestimmt, beispielsweise mit $\mu = 0.2$.

In einem dritten Schritt S3 des Verfahrens wird die an den Netzknoten bestimmte Regelleistung durch ein entsprechendes Reduzieren oder Erhöhen der an diesem Netzknoten durch die Energiesysteme 2 maximal bereitstellbaren Leistungen berücksichtigt.

Mit anderen Worten werden die maximale bereitstellbaren Leistungen/Energien, die aus den Energiesystemen 2 an die Steuerungsvorrichtung 1 übermittelt wurden und dem ersten Optimierungsproblem zugrunde lagen, durch die im zweiten Schritt S3 ermittelte und erforderliche Reserveleistung korrigiert. Ein Teil der durch die Energiesysteme 2 maximale bereitstellbaren Leistungen wird somit als Reserveleistung vorgesehen. Beispielsweise wird ein vorgesehener Verbrauch an einem Netzknoten reduziert und/oder an einem Netzknoten vorgesehene Einspeisung erhöht. Diese sinnbildlich fiktiven und um die Regelleistung korrigierten maximale bereitstellbaren Leistungen werden anschließend für eine zweite Optimierung verwendet. Mit anderen Worten werden anstatt der übermittelten maximal bereitstellbaren Leistungen, die bei der ersten Optimierung zum Bestimmen der erforderlichen Regelleistung verwendet wurde, bei der zweiten Optimierung die um die erforderliche Regelleistung korrigierten maximale bereitstellbaren Leistungen verwenden.

Die bestimmte Regelleistung kann gemäß einer festgelegten und/oder ermittelten Reihenfolge 42 im obengenannten Sinne auf die Energiesysteme 2 umgelegt werden. Mit anderen Worten wird ermittelt, welches Energiesystem 2 welchen Beitrag zu einer an einem Netzknoten erforderlichen und bestimmten Regelleistung leistet. Diese Reihenfolge ist in der Figur durch das Diagramm des Schrittes S3 symbolisiert, wobei beispielsweise an der Abszisse des Diagramms die Regelleistung in Kilowattstunden (kWh) und an der Ordinate die mit der Bereitstellung der jeweiligen Regelleistung verbundenen Entgelte der Energiesysteme 2 verbunden sind. Mit anderen Worten können die Energiesysteme 2 bezüglich ihrer Entgelte für das Bereitstellen der Regelleistung oder bezüglich ihrer Kohlendioxidemissionen für das Bereitstellen der Regelleistung angeordnet werden (Reihenfolge 42). Im Rahmen eines lokalen Energiemarktes kann somit basierend auf Kenntnis der übermittelte Daten, beispielsweise in Form von Geboten, von der Steuerungsvorrichtung 1 des lokalen Energiemarktes eine netzknotenscharfe beziehungsweise netzknotenaufgelöste Entgeltfunktion oder Kohlenstoffdioxidemissionsfunktion für das Bereitstellen der Regelleistung ermittelt werden, wobei die Energiesysteme 2 beziehungsweise ihre zugehörigen energietechnischen Anlagen aufsteigend nach ihren Entgelten oder ihrer Kohlenstoffdioxidemission für das Bereitstellen der Regelleistung beziehungsweise des Flexibilitätsbedarfs geordnet werden (Reihenfolge 42). Der bestimmte Flexibilitätsbedarf sowie gegebenenfalls die Entgeltfunktion oder die Kohlenstoffdioxidemissionsfunktion können von der Steuerungsvorrichtung 1 an die Steuereinheit 3 des elektrischen Netzes 4 übermittelt werden. Dies ist durch den Pfeil 103 gekennzeichnet.

In einem vierten Schritt S4 des Verfahrens werden vorgesehene zweiten Leistungen basierend auf den reduzierten beziehungsweise erhöhten maximal bereitstellbaren Leistungen mittels der zweiten Optimierung ermittelt. Hierbei wird dieselbe Zielfunktion für die erste Optimierung verwendet. Allerdings werden für die zweite Optimierung nicht die übermittelten maximal bereitstellbaren Leistungen/Energiemengen $P^{A,B}_{\max,t,n,k}$ beziehungsweise $E^{A,B}_{\max,t,n,k}$ als Nebenbedingung der Form $P^{A,B}_{t,n,k}\Delta t \leq E^{A,B}_{\max,t,n,k}$ verwendet, sondern die um die Regelleistung korrigierten bereitstellbaren Leistungen/Energiemengen $\hat{P}^{A,B}_{\max,t,n,k}$ beziehungsweise $\hat{E}^{A,B}_{\max,t,n,k} \cdot$ Dadurch wird der interne Regelleistungsbedarf bei der zweiten Optimierung berücksichtigt. Weiterhin kann zusätzlich ein externer Regelleistungsbedarf eines dem elektrischen Netz 4 übergeordneten Netzes berücksichtigt werden. Die Steuereinheit 3 des elektrischen Netzes 4 kann hierbei festlegen, welcher interne und/oder externe Regelleistungsbedarf tatsächlich berücksichtigt wird. Insbesondere wird der externe Regelleistungsbedarf durch die Steuereinheit 3 des elektrischen Netzes festgelegt und an die Steuerungsvorrichtung 1 zum Berücksichtigen übermittelt werden. Dies ist durch den Pfeil 104 symbolisiert.

In einem fünften Schritt S5 des Verfahrens werden die Lastflüsse zwischen den Energiesysteme 2 beziehungsweise zwischen den energietechnischen Anlagen der Energiesysteme 2 gemäß der ermittelten zweiten Leistungen gesteuert. Dadurch wird sichergestellt, dass der ermittelte interne Regelleistungsbedarf sowie gegebenenfalls zusätzlich der externe Regelleistungsbedarf durch die tatsächlichen Lastenflüsse, beispielsweise am nächsten Tag, bereitgestellt wird (symbolisiert durch den Pfeil 105). Hierbei kann zunächst überprüft werden, welche energietechnische Anlage an welchen Netzknoten angeschlossen ist. Anschließend kann festgestellt werden, ob die jeweilige energietechnische Anlage einsatzbereit beziehungsweise verfügbar ist. Dann werden die einsatzbereiten beziehungsweise verfügbaren energietechnischen Anlagen nach der ermittelten Reihenfolge 42 priorisiert und derart durch lokale Steuereinheiten angesteuert, dass diese im vorgesehenen Zeitbereich die Leistung gemäß ihrer zugehörigen und ermittelten zweiten Leistung erbringen. Wird ein Fehler innerhalb des genannten Vorgehens festgestellt, so kann das Verfahren, gegebenenfalls unter Berücksichtigung aktueller Messwerte oder bereits bereitgestellter Energiemengen (Echtzeitoptimierung) wiederholt werden.

Durch das vorliegende Verfahren wird im Rahmen eines lokalen Energiemarktes somit ein um die technisch erforderliche Reserveleistung korrigierter Handel von elektrischer Energie ermöglicht.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

Bezugszeichenliste

1    Steuerungsvorrichtung
2    Energiesystem
3    Steuereinheit
4    elektrisches Netz
21   Edge-Device
22   Steuergerät
23   Anlage
42   Reihenfolge
101  Pfeil
102  Pfeil
103  Pfeil
104  Pfeil
105  Pfeil
S1   erster Schritt
S2   zweiter Schritt
S3   dritter Schritt
S4   vierter Schritt
S5   fünfter Schritt

**Patentansprüche**

1. Verfahren zum Steuern von Lastflüssen zwischen mehreren Energiesystemen (2) über ein elektrisches Netz (4) mittels einer bezüglich der Energiesysteme (2) gemeinsamen Steuerungsvorrichtung (1), wobei durch die Energiesysteme (2) jeweils eine mit einem Lastfluss assoziierte Leistung an wenigstens einem Netzknoten des elektrischen Netzes (4) bereitstellbar ist, umfassend wenigstens die folgenden Schritte:

    - (S1) Ermitteln von für die Lastflüsse vorgesehenen ersten Leistungen basierend auf aus den Energiesystemen (2) an die Steuerungsvorrichtung (1) übermittelten Daten, die eine Information über eine durch das jeweilige Energiesystem am jeweiligen Netzknoten maximal bereitstellbare Leistung umfassen;
    - (S2) Bestimmen einer bezüglich des elektrischen Netzes (4) internen und netzknotenaufgelösten Regelleistung basierend auf den ermittelten vorgesehenen ersten Leistungen sowie basierend auf bereitgestellten Netzrandbedingungen des elektrischen Netzes (4);
    - (S3) Berücksichtigen der an den Netzknoten bestimmten Regelleistung durch ein entsprechendes Reduzieren oder Erhöhen der an diesem Netzknoten durch die Energiesysteme (2) maximal bereitstellbaren Leistungen;
    - (S4) Ermitteln von vorgesehenen zweiten Leistungen basierend auf den reduzierten beziehungsweise erhöhten maximal bereitstellbaren Leistungen; und
    - (S5) Steuern der Lastflüsse gemäß der ermittelten zweiten Leistungen.

2. Verfahren gemäß Anspruch 1, **gekennzeichnet dadurch, dass** zusätzlich eine für ein bezüglich des elektrischen Netzes (4) übergeordnetes elektrisches Netz vorgesehene externe Regelleistung entsprechend der internen Regelleistung berücksichtigt wird.

3. Verfahren gemäß Anspruch 2, **gekennzeichnet dadurch, dass** die externe Regelleistung und/oder eine Netztopologie durch eine Steuereinheit (3) des übergeordneten Netzes an die Steuerungsvorrichtung (1) übermittelt wird.

4. Verfahren gemäß einem der vorhergehenden Ansprüche, **gekennzeichnet dadurch, dass** das Ermitteln der ersten Leistungen mittels einem ersten Optimierungsverfahren basierend auf einer ersten Zielfunktion unter Berücksichtigung der Netzrandbedingungen erfolgt, wobei die ersten Leistungen die Variablen der ersten Zielfunktion sind.

5. Verfahren gemäß Anspruch 4, **gekennzeichnet dadurch, dass** eine Reihenfolge (42) der Energiesysteme (2) gemäß welcher Reihenfolge das Reduzieren oder Erhöhen der bereitstellbaren Leistungen an einem der Netzknoten erfolgt basierend auf der ersten Optimierung festgelegt wird.

6. Verfahren gemäß einem der vorhergehenden Ansprüche, **gekennzeichnet dadurch, dass** das Ermitteln der zweiten Leistung mittels einem zweiten Optimierungsverfahren basierend auf einer zweiten Zielfunktion unter Berücksichtigung der Netzrandbedingungen erfolgt, wobei die zweiten Leistungen die Variablen der zweiten Zielfunktion sind.

7. Verfahren gemäß einem der vorhergehenden Ansprüche, **gekennzeichnet dadurch, dass** die Netzrandbedingungen maximale Leitungskapazitäten für einen Lastfluss von einem Netzknoten zu einem weiteren Netzknoten umfassen.

8. Verfahren gemäß Anspruch 7, **gekennzeichnet dadurch, dass** die an einem Netzknoten erforderliche interne Regelleistung mittels eines Risikofaktors aus der maximalen Leistungskapazität ermittelt wird.

9. Verfahren gemäß einem der vorhergehenden Ansprüche, **gekennzeichnet dadurch, dass** die Daten eine Information über eine maximale Anschlussleistung der jeweiligen Energiesysteme (2) umfassen.

10. Verfahren gemäß einem der vorhergehenden Ansprüche, **gekennzeichnet dadurch, dass** die bereitstellbaren Leistungen, die entsprechend der bestimmten Regelleistung reduziert oder erhöht werden, mit einem zeitlich verschiebbaren Verbrauch, einer zeitlich verschiebbaren Erzeugung und/oder mit einer Bereitstellung durch einen Energiespeicher des jeweiligen Energiesystems (2) assoziiert sind.

11. Verfahren gemäß einem der vorhergehenden Ansprüche, **gekennzeichnet dadurch, dass** die Steuerungsvorrichtung (1) zum Steuern der Lastflüsse innerhalb eines lokalen Energiemarktes verwendet wird.

12. Verfahren gemäß einem der vorhergehenden Ansprüche, **gekennzeichnet dadurch, dass** dieses für einen kommenden Tag, insbesondere für den nächsten Tag, durchgeführt wird.

13. Verfahren gemäß einem der vorhergehenden Ansprüche, **gekennzeichnet dadurch, dass** dieses wiederholend in Zeitabschnitten von einem Tag, einer Stunde, 15 Minuten und/oder 5 Minuten durchgeführt wird.

14. Steuerungsvorrichtung (1) zur Steuerung von Lastflüssen zwischen mehreren Energiesystemen (2) über ein elektrisches Netz (4), umfassend eine Kommunikationseinheit sowie eine Recheneinheit, wobei die Kommunikationseinheit dazu ausgebildet ist, Daten, die eine Information über eine durch das jeweilige Energiesystem (2) am jeweiligen Netzknoten maximal bereitstellbare Leistung umfassen, zu empfangen, **dadurch gekennzeichnet, dass** die Recheneinheit dazu ausgebildet ist

- für die Lastflüsse vorgesehenen erste Leistungen basierend auf den empfangenen am jeweiligen Netzknoten maximal bereitstellbaren Leistungen zu ermitteln;
- eine bezüglich des elektrischen Netzes (4) interne und netzknotenaufgelöste Regelleistung basierend auf den ermittelten vorgesehenen ersten Leistungen sowie basierend auf bereitgestellten Netzrandbedingungen des elektrischen Netzes (4) zu bestimmen;
- die an den Netzknoten bestimmten Regelleistungen durch ein entsprechendes Reduzieren oder Erhöhen der an diesem Netzknoten durch die Energiesysteme (2) maximal bereitstellbaren Leistungen zu berücksichtigen;
- vorgesehene zweite Leistungen basierend auf den reduzierten beziehungsweise erhöhten maximal bereitstellbaren Leistungen; zu ermitteln; und
- die Lastflüsse gemäß der ermittelten zweiten Leistungen zu steuern.

15. Steuerungsvorrichtung (1) gemäß Anspruch 14, **dadurch gekennzeichnet, dass** diese als lokale Energiemarktplattform ausgebildet ist.

FIG 1

FIG 2

**Europäisches Patentamt**
**European Patent Office**
**Office européen des brevets**

# EUROPÄISCHER RECHERCHENBERICHT

**Nummer der Anmeldung**

EP 21 16 1052

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | CN 111 062 513 A (UNIV SICHUAN) 24. April 2020 (2020-04-24) * Absatz [0062] - Absatz [0086] * ----- | 1-15 | INV. H02J3/14 H02J3/32 H02J3/46 |
| A | FIROOZI HOOMAN ET AL: "Optimized Operation of Local Energy Community Providing Frequency Restoration Reserve", IEEE ACCESS, IEEE, USA, Bd. 8, 28. September 2020 (2020-09-28), Seiten 180558-180575, XP011813768, DOI: 10.1109/ACCESS.2020.3027710 [gefunden am 2020-10-08] * Sections II and III * ----- | 1-15 | H02J3/48 B63G1/00 |
| A | YAN XINGYU ET AL: "Uncertainty analysis for day ahead power reserve quantification in an urban microgrid including PV generators", RENEWABLE ENERGY, PERGAMON PRESS, OXFORD, GB, Bd. 106, 18. Januar 2017 (2017-01-18), Seiten 288-297, XP029921192, ISSN: 0960-1481, DOI: 10.1016/J.RENENE.2017.01.022 * Section 4 * ----- | 1-15 | |

**RECHERCHIERTE SACHGEBIETE (IPC)**

H02J

Der vorliegende Recherchenbericht wurde für alle Patentansprüche erstellt

| Recherchenort | Abschlußdatum der Recherche | Prüfer |
|---|---|---|
| München | 13. August 2021 | Chabas, Julien |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 16 1052

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-08-2021

| Im Recherchenbericht angeführtes Patentdokument | Datum der Veröffentlichung | Mitglied(er) der Patentfamilie | Datum der Veröffentlichung |
|---|---|---|---|
| CN 111062513 A | 24-04-2020 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3518369 A1